# EUROPÄISCHE PATENTSCHRIFT

(11) **EP 1 310 467 B1**
(45) Veröffentlichungstag und Bekanntmachung des Hinweises auf die Patenterteilung: **03.03.2010**
(21) Anmeldenummer: 02024365.5
(22) Anmeldetag: 02.11.2002
(51) Int. Cl.: C04B 7/43

(54) **Verfahren und Einrichtung zur Einführung von festen flugfähigen Brennstoffen in den Calcinator einer Zementklinkerproduktionslinie**
Method and apparatus for the introduction of solid dusting fuel in the calciner of a cement clinker production line
Procédé et dispositif pour l'introduction de carburants solides poussiereux dans le four à calciner d'un ligne de production pour clinker de ciment

(30) Priorität: 10.11.2001 DE 10155407
(43) Veröffentlichungstag der Anmeldung: 14.05.2003
(73) Patentinhaber: KHD Humboldt Wedag GmbH, 51067 Köln (DE)
(72) Erfinder: Köllen, Stefan, 50226 Frechen (DE); Steffler, Claus-Jürgen, 53797 Lohmar (DE); Müller, Wolfgang, 40789 Monheim am Rhein (DE)

(56) Entgegenhaltungen:
- DE-A- 2 307 027
- DE-A- 2 312 379
- DE-A- 2 350 768
- DE-A- 2 361 427
- DE-A- 2 510 312

## Beschreibung

Die Erfindung betrifft ein Verfahren zur Einführung von festen flugfähigen Brennstoffen wie z. B. Kohlenstaub in den Calcinator einer Anlage zur Herstellung von Zementklinker aus Zementrohmehl, das in einem Wärmetauschersystem vorerhitzt, in dem mit dem Brennstoff versorgten Calcinator calciniert und in einem Drehrohrofen zu Zementklinker gebrannt wird, wobei das vorerhitzte Zementrohmehl über einen außen am Calcinator angeordneten und mit diesem durch eine Wandöffnung verbundenen Mehleintrittskasten mit schräger Rohmehlrutsche und Prallschieber in die Reaktionsstrecke des Calcinators eingeführt wird. Außerdem betrifft die Erfindung eine Einrichtung zur Durchführung des Verfahrens.

Zementklinkerproduktionslinien der oben beschriebenen Art müssen in der Lage sein, in dem mit Zweitfeuerung (neben der Drehofenfeuerung) ausgestatteten Calcinator ein hochgradig calciniertes Rohmehl vor Einführung in den Drehrohrofen zu erzeugen. Dabei müssen im Calcinator große Brennstoffmengen verbrannt werden, um die stark endotherme Calcinierungsreaktion (spezifischer Wärmeverbrauch 550 kcal/kg Klinker bei einem Gesamtwärmeverbrauch von ca. 800 kcal/kg Zementklinker) durchführen zu können. Als Calcinierreaktor wird oft die zunächst annähernd vertikal ansteigende Drehofenabgasleitung genutzt, die in der Regel um 180° in einen absteigenden Rohrleitungsast umgelenkt wird, der in den untersten Zyklon des Zyklonschwebegas-Wärmetauschersystems zwecks Abtrennung des calcinierten Rohmehls vom Abgasstrom einmündet.

In die Reaktionsstrecke des Drehofenabgaskanals wird das vorerhitzte Rohmehl aus der vorletzten Zyklonstufe des Zyklonschwebegas-Wärmetauschersystems sowie der Calcinierbrennstoff eingeführt, welch letzterer mit überschüssigem Sauerstoff aus dem Drehofenabgas und/oder mit dem Sauerstoff aus der vom Klinkerkühler herangeführten Tertiärluft verbrannt wird. Nicht zuletzt aus Kostengründen besteht der Calcinierbrennstoff oft aus festen flugfähigen Brennstoffen wie z. B. Kohlenstaub, der über eine Rohrleitung in die Reaktionsstrecke des Calcinators eingeblasen wird.

Für einen gleichmäßigen Ablauf der Verbrennungsreaktion und der dazu parallel verlaufenden Calcinierungsreaktion ist eine gleichmäßige Verteilung des Rohmehls und des Brennstoffs in der Reaktionsstrecke des Calcinators von Wichtigkeit. Zwar hat man sich bemüht, das vorerhitzte Zementrohmehl aus der zweituntersten Zyklonstufe des Zyklonschwebegas-Wärmetauschersystems dadurch gleichmäßig über den Querschnitt der Reaktionsstrecke des Calcinators zu verteilen, indem das vorerhitzte Rohmehl über einen außen am Calcinator angeordneten und mit diesem durch eine Wandöffnung verbundenen Mehleintrittskasten mit schräger Rohmehlrutsche und verstellbarem Prallschieber in die Reaktionsstrecke des Calcinators eingeführt wird (Veröffentlichung "KHD SYMPOSIUM '92 Band 2 Moderne Brenntechnik" der KHD Humboldt Wedag AG, 1993, Aufsatz "Entwicklungstrends beim Klinker-Brennprozess" von C. Bauer, Seiten 11 bis 15, Bild 3). Jedoch hat man beobachtet, dass dann, wenn wie bisher üblich die Kohlenstaub-Einblasstelle des Calcinierreaktors zur Rohmehleinführungsstelle gegenüberliegend oder jedenfalls seitlich versetzt angeordnet und der feste Brennstoff über den Calcinatorquerschnitt nicht optimal verteilt ist, die Gefahr nicht auszuschließen ist, dass an der Kohlenstaub-Einblasstelle im Calcinator eine offene Flamme auftritt (siehe auch DE-B-25 10 312), die zu lokalen Überhitzungen mit Gutmaterial-Schmelzphasenbildung und unerwünschten Gutmaterialanbackungen führt, d. h. es war bisher nicht immer gewährleistet, dass der Festbrennstoff wie z. B. Kohlenstaub in der Gas-Rohmehlsuspension flammenlos oxidiert bzw. verbrennt.

Im Detail offenbart dieses Dokument DE2510312 ein Verfahren zur Einführung von Brennstoff in den Kalzinator einer Anlage zur Herstellung von Zementklinker aus Zementrohmehl, das in einem Wärmetauschersystem vorerhitzt, in der mit dem Brennstoff versorgten sauerstoffhaltigen Hauptgasleitung kalziniert und in einem Drehrohrofen zu Zementklinker gebrannt wird, wobei das vorerhitzte Zementrohmehl über einen aussen am Kalzinator angeordneten und mit diesem durch eine Wandöffnung verbundenen Mehleintrittskasten mit schräger Rohmehlrutsche in die Reaktionsstrecke des Kalzinators eingeführt wird. Der Brennstoff wird getrennt vom Rohmehl und unterhalb davon in den Kalzinator eingeführt. In einer bevorzugten Ausführung wird der Brennstoff in der Brennkammer gezündet und voroxidiert, bevor er im sauerstoffhaltigen Gasstrom nachoxidiert und oben in der Reaktionszone eine gleichmäßig verteilte Gas-Rohmehl-Brennstoff-Suspension bildet. Vertikaler Abstand und eine Prallvorrichtung in der Gasleitung verhindern, daß das Rohmehl auf die Höhe der Brennkammer fällt, wo somit ungestört eine vollkommen gleichmäßige Flammenausbildung mit genau einstellbarem Temperaturprofil erreicht werden kann. Deswet

Dokument DE2350768 offenbart ein Verfahren, in dem vorgewärmtes und mit Verbrennungsluft gemischtes Feingut mit Brennstoff versetzt als Gemisch in die Reaktionsstrecke des Kalzinators eingeführt wird und sich dort gleichmäßig im Gasstrom verteilt. Mittels Abgasstrom und Brennstoff wird das Feingut im Kalzinator gleichmäßig nur bis zur kritischen Temperatur - und nicht darüber hinaus - erhitzt. Dadurch werden Schmelzphasen- und dadurch Klumpenbildung sowie Anbackungen verhindert. Die Temperatur in der Kalzinierzone lässt sich so kontrollieren, dass sie unterhalb der kritischen Temperatur liegt und lokale Überhitzungen somit vermieden werden.

Dokument DE2307027 offenbart ein Verfahren, in dem vorgewärmtes Gut mit Brennstoff und Verbrennungsluft versetzt wird. Beim Übertritt aus dem beengten Mischrohr in die geräumige Ofenübergangskammer verteilt sich das Gemisch gleichmäßig im heißen Abgasstrom, wobei sich eine Brennzone entwickelt, in der die einzelnen Brennstoffpartikel in unmittelbarer Nähe der einzelnen Gutteilchen verbrennen und diese damit bis unterhalb der Schmelztemperatur erhitzen. Somit erfolgt die Verbrennung des Brennstoffs flammenlos.

Dokument DE2361427 offenbart ein Verfahren, in dem fluidisierte Kohle über eine Förderschnecke und Fluidisierungsgas über eine Zufuhr in den fluidisierten Mehlstrom eingebracht und innig vermischt wird vor Eintritt in den Kalzinierer. Am Übergang vom Mischraum zum Kalzinierer liegt eine Kante, welche die Wirbelschicht beim Einfliessen in den Gasstrom umlenkt. Beim Kontakt des Kohlenstaubs mit dem heißen Rohmehl werden aus der Kohle brennbare Gase (CO, CH4) freigesetzt. Beim Eintritt des Gemischs in den sauerstoffhaltigen Abgasstrom im Kalzinierer verbrennt das brennbare Gas, wodurch das Material kalziniert wird. Somit erfolgt die Verbrennung des Brennstoffs flammenlos.

Der Erfindung liegt daher die Aufgabe zugrunde, bei Zementklinkerproduktionslinien mit Einblasung von festen flugfähigen Brennstoffen wie z. B. Kohlenstaub in den mit diesem Brennstoff versorgten Calcinator dafür zu sorgen, dass der Brennstoff über den Calcinatorquerschnitt optimal verteilt ist und dass an der Brennstoffeinblasstelle eine offene Flamme nicht auftritt.

Diese Aufgabe wird gemäß der Erfindung verfahrensmäßig mit den Maßnahmen des Anspruchs 1 und vorrichtungsmäßig mit den Merkmalen des Anspruchs 3 gelöst. Vorteilhafte Ausgestaltungen der Erfindung sind in den jeweiligen Unteransprüchen angegeben.

Erfindungsgemäß wird der Brennstoff wie z. B. Kohlenstaub zunächst in den außen am Calcinator angeordneten und mit diesem durch eine Wandöffnung verbundenen Mehleintrittskasten mit der schrägen Rohmehlrutsche und dem Prallschieber eingeblasen und dort mit dem sich darin befindlichen vorerhitzten Rohmehl vorvermischt, wonach das Gemisch aus Rohmehl und Kohlenstaub über den Prallschieber in die Reaktionsstrecke des Calcinators eingeführt wird zur Bildung einer gleichmäßig über den Calcinatorquerschnitt verteilten Gas-Rohmehl-Festbrennstoff-Suspension, in welcher der Brennstoff in Anwesenheit von Sauerstoff aus dem Drehofenabgas und/oder aus der vom Klinkerkühler herangeführten Tertiärluft flammenlos oxidiert bzw. verbrennt. Die vorvermischte Rohmehl-Kohlenstaub-Suspension lässt die Ausbildung einer offenen Flamme nicht zu. Dabei kann der Calcinierbrennstoff überstöchiometrisch mit Sauerstoffüberschuss, oder auch unterstöchiometrisch mit Sauerstoffmangel verbrannt werden zwecks Erzeugung einer CO-haltigen Reduktionszone zur Reduktion des im Drehofenabgas enthaltenen Schadstoffs NOₓ. In beiden Fällen kann eine angestrebte flammenlose Verbrennung des Calcinierbrennstoffs gewährleistet werden.

Mit der Einblasung der festen Brennstoffe in den Mehleintrittskasten ist auch eine ständige Reinigung des dort installierten verstellbaren Prallschiebers verbunden. Ein sauberer abgereinigter Prallschieber ist eine wesentliche Voraussetzung für eine gleichmäßige Verteilung des Rohmehls (und des festen Brennstoffs) über den Calcinatorquerschnitt.

Die Einblasung der festen flugfähigen Brennstoffe in den Mehleintrittskasten darf nicht so erfolgen, dass durch die höhere Geschwindigkeit der pneumatischen Förderluft die Feststoffsuspension auf die der Einführungsstelle in den Calcinator gegenüberliegende Calcinatorwandung geblasen wird. Daher wird nach einem weiteren Merkmal der Erfindung die Fördergeschwindigkeit des pneumatischen Transports des festen Brennstoffs von z. B. ca. 25 m/sec vor Eintritt in den Mehleintrittskasten mit Vorteil reduziert. Die mittlere Strömungsgeschwindigkeit im Rohrcalcinator selbst beträgt z. B. nur ca. 16 m/sec.

Eine erfindungsgemäße Einrichtung zur Durchführung des Verfahrens ist dadurch gekennzeichnet, dass der Mehleintrittskasten wenigstens einen Stutzen zur Einblasung des Festbrennstoffs wie z. B. Kohlenstaubs aufweist zur Vorvermischung des Festbrennstoffs mit dem vorerhitzten Rohmehl vor Einführung des Gemisches in die Reaktionsstrecke des Calcinators. Dabei ist der Stutzen bzw. sind die Stutzen zur Einblasung des Kohlenstaubs oben und/oder seitlich am Mehleintrittskasten angeordnet.

Die Erfindung und deren weitere Merkmale und Vorteile werden anhand der in den Figuren schematisch dargestellten Ausführungsbeispiele näher erläutert.

Es zeigt:
- Fig. 1:: ausschnittsweise einen Vertikalschnitt durch einen Rohrcalcinator einer Zementklinkerproduktionslinie mit außen am Calcinator angeordnetem Mehleintrittskasten,
- Fig. 2:: ausschnittsweise eine Draufsicht auf Figur 1,
- Fig. 3:: die Ansicht in das Innere des Mehleintrittskastens mit über die schräge Rohmehlrutsche abrutschender Menge an heißem Rohmehl, und
- Fig. 4:: als Variante zu Figur 1 eine etwas andere Konfiguration des Mehleintrittskastens mit seitlicher Einblasung von festen flugfähigen Brennstoffen.

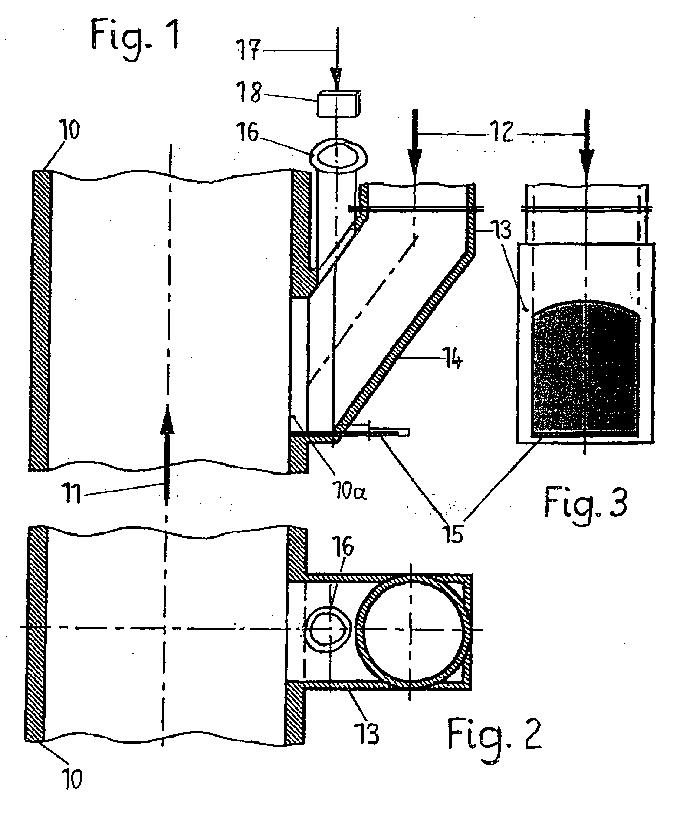

Figur 1 zeigt ausschnittsweise den Vorcalcinator einer Zementklinkerproduktionslinie, mit einem vom Guteinlaufgehäuse eines Drehrohrofens von unten nach oben geführten Drehofenabgaskanal 10, der nach oben zum untersten Zyklon eines nicht dargestellten Zyklonschwebegas-Vorwärmersystems zur Vorerhitzung des Zementrohmehls führt. Der im vorletzten (zweituntersten) Zyklon aus dem Abgasstrom 11 ausgeschiedene vorerhitzte Rohmehlstrom 12 wird über einen außen am Drehofenabgaskanal 10 angeordneten Mehleintrittskasten 13 über dessen schräge Rohmehlrutsche 14 sowie über dessen Prallschieber 15 durch eine Wandöffnung 10a des Drehofenabgaskanals hindurch in die Reaktionsstrecke des Vorcalcinators eingeführt und dort durch Einstellung des verstellbaren Prallschiebers 15 im Abgasstrom 11 gleichmäßig verteilt. Das im Mehleintrittskasten 13 über die Rohmehlrutsche 14 abrutschende und über den verstellbaren Prallschieber 15 verteilte Gutmaterial ist in Figur 3 als schwarze Fläche dargestellt.

Wie in den Figuren 1 und 2 zu sehen weist der Mehleintrittskasten 13 z. B. im Zwickelbereich zwischen der Rohmehleinführung in den Calcinator und dem Drehofenabgaskanal 10 wenigstens einen nach oben geführten Stutzen 16 auf, durch den ein fester flugfähiger Brennstoff 17 z. B. Kohlenstaub in den Mehleintrittskasten 13 eingeblasen wird zur Vorvermischung des Kohlenstaubs 17 mit dem vorerhitzten Rohmehl 12 vor Einführung des Gemisches in die Reaktionsstrecke des Calcinators. Während der freie Querschnitt des als Vorcalcinator genutzten Drehofenabgaskanales 10 z. B. 6 bis 8 m² beträgt, ist demgegenüber die freie Querschnittsfläche im Mehleintrittskasten 13 mit z. B. 1 m² klein bemessen, d. h. dort ist die Suspensionsdichte des aus vorerhitztem Zementrohmehl 12 und Kohlenstaub 17 bestehenden Feststoffgemisches hoch, so dass sich weder im Mehleintrittskasten noch im Calcinator selbst eine offene Flamme ausbilden kann.

Es findet eine gute Vermischung des Kohlenstaubs 17 mit dem Rohmehlstrom 12 im Bereich 14/15 vor 10a statt und dieses Gemisch wird über den Querschnitt des Calcinierreaktors 10 gleichmäßig verteilt, wodurch der Brennstoff in der Reaktionsstrecke des Calcinators flammenlos verbrannt wird und eine hochgradige Rohmehlcalcinierung stattfindet.

Bei unterstöchiometrischer Brennstoffverbrennung kann im Drehofenabgaskanal 10 eine sich von der Brennstelle bzw. Wandöffnung 10a nach oben erstreckende CO-haltige Wolke erzeugt werden, die wirkungsvoll NOₓ-Verbindungen, die aus dem Drehrohrofen kommen, reduziert und die verhindert, dass solche NOₓ-Verbindungen in die oberen Bereiche des erfindungsgemäßen Calciniersystems gelangen und emittiert werden können.

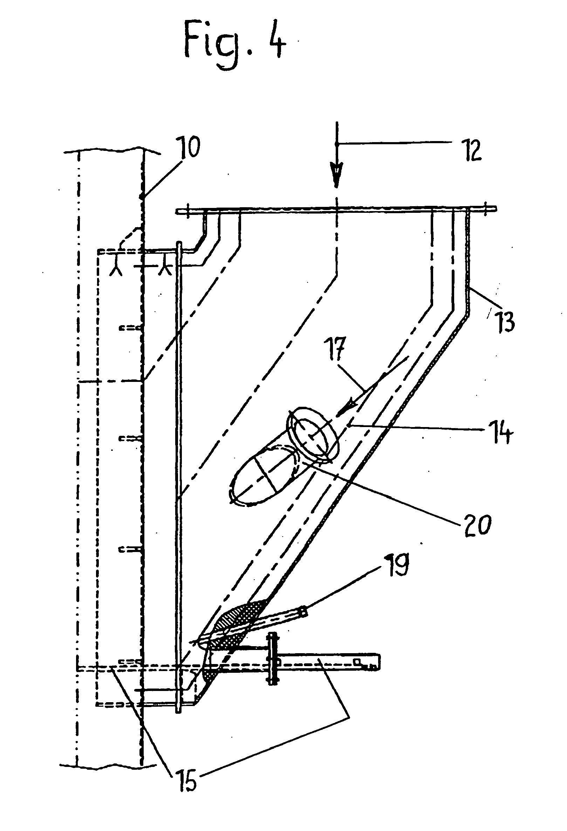

Während die mittlere Geschwindigkeit des Abgasstromes 11 im Drehofenabgaskanal 10 z. B. 16 m/sec beträgt, liegt die Fördergeschwindigkeit der pneumatischen Förderung des Kohlenstaubs 17 höher, z. B. bei 25 m/sec. Damit durch diese höhere Geschwindigkeit der Kohlenstaubeinblasung in den Mehleintrittskasten 13 das Rohmehl nicht an die der Einblasstelle gegenüberliegende Innenwandung des Drehofenabgaskanals 10 geschleudert wird, wird die Fördergeschwindigkeit des pneumatischen Transports des Kohlenstaubs 17 vor Eintritt in den Mehleintrittskasten 13 mit Vorteil reduziert, und zwar z. B. durch einen vorgeschalteten Pralltopf 18. Durch die Kohlenstaubeinblasung in den Mehleintrittskasten 13 wird nicht nur das Gemisch aus Rohmehl und Kohlenstaub im Abgasstrom 11 möglichst gleichmäßig verteilt, sondern es wird gleichzeitig auch der Prallschieber 15 von Gutansätzen gereinigt, so dass die in Figur 4 zu sehenden oberhalb des Prallschiebers 15 angeordneten Pressluftdüsen 19 zur Abreinigung der Prallschieberplatte nicht so häufig betätigt werden müssen.

Während nach dem Ausführungsbeispiel der Figuren 1 und 2 der Kohlenstaub 17 von oben in den Mehleintrittskasten 13 eingeblasen wird, wird er nach dem Ausführungsbeispiel der Figur 4 von der Seite her in den Mehleintrittskasten 13 eingeblasen, indem der oder die beiden sich gegenüberliegenden Stutzen 20 zur Einblasung des Kohlenstaubs seitlich am Mehleintrittskasten 13 angeordnet ist/sind.

Zwecks optimaler Vermischung des Kohlenstaubs 17 mit dem Rohmehl 12 und gleichmäßigen Verteilung im Calcinator können die Stutzen 16 bzw. 20 zur Kohlenstaubeinblasung noch mit einem Gelenk zur Winkelverstellung ausgestattet sein.

Anstelle des oder auch zusätzlich zu dem Drehofenabgaskanal 10 kann auch der vom Zementklinker-Kühler kommende Tertiärluftkanal als Vorcalcinator genutzt und mit dem erfindungsgemäß ausgestatteten Mehleintrittskasten 13 ausgestattet sein. Es muss nicht die gesamte zur Vorcalcination des Zementrohmehls benötigte Brennstoffmenge über den erfindungsgemäß ausgebildeten Mehleintrittskasten 13 in die Reaktionsstrecke des Calcinators eingeführt werden, sondern es kann auch genügen, dass wenigstens ein Teilstrom des Calcinierbrennstoffs auf dem erfindungsgemäßen Weg über den Mehleintrittskasten 13 in den Calcinator eingeführt und die restliche Calcinierbrennstoffmenge auf konventionelle Weise in den Calcinator eingeführt werden, wenn nur insgesamt erreicht ist, dass die gesamte zur Calcination benötigte Menge an Festbrennstoff über den Calcinatorquerschnitt optimal verteilt ist und ohne Ausbildung einer offenen Flamme flammenlos verbrennt.

Als in den Calcinator einer Zementklinkerproduktionslinie einzuführende feste flugfähige Brennstoffe können außer Kohlenstaub auch Ersatzbrennstoffe wie z. B. vorzerkleinertes Kunststoffmaterial, Gummimaterial, Holzmaterial etc. eingesetzt werden.

## Patentansprüche

1. Verfahren zur Einführung von festen flugfähigen Brennstoffen (17) wie z. B. Kohlenstaub in den Calcinator (10) einer Anlage zur Herstellung von Zementklinker aus Zementrohmehl, das in einem Wärmetauschersystem vorerhitzt, in dem mit dem Brennstoff versorgten Calcinator calciniert und in einem Drehrohrofen zu Zementklinker gebrannt wird, wobei das vorerhitzte Zementrohmehl (12) über einen außen am Calcinator (10) angeordneten und mit diesem durch eine Wandöffnung (10a) verbundenen Mehleintrittskasten (13) mit schräger Rohmehlrutsche und Prallschieber in die Reaktionsstrecke des Calcinators eingeführt wird,
**dadurch gekennzeichnet, dass**
der Brennstoff (17) in den Mehleintrittkasten (13) eingeführt und dort mit dem vorerhitzten Rohmehl (12) vorvermischt und danach über den Prallschieber (15) in die Reaktionsstrecke des Calcinators (10) zur Bildung einer gleichmäßig verteilten Gas-Rohmehl-Festbrennstoff-Suspension eingeführt wird.

2. Verfahren nach Anspruch 1,
**dadurch gekennzeichnet, dass**
**die Einführung in den Mehleintrittkasten (13) pneumatisch erfolgt, wobei** die Fördergeschwindigkeit des pneumatischen Transports des Brennstoffs (17) vor Eintritt in den Mehleintrittskasten (13) reduziert wird.

3. Einrichtung zur Einführung von festen flugfähigen Brennstoffen (17) wie z. B. Kohlenstaub in den Calcinator (10) einer Anlage zur Herstellung von Zementklinker aus Zementrohmehl, das in einem Wärmetauscher-System vorerhitzt, in dem mit dem Brennstoff versorgten Calcinator calciniert und in einem Drehrohrofen zu Zementklinker gebrannt wird, wobei außen am Calcinator (10) ein mit diesem durch eine Wandöffnung (10a) verbundener Mehleintrittskasten (13) mit schräger Rohmehlrutsche (14) und Prallschieber (15) angeordnet ist,
**dadurch gekennzeichnet, dass**
der Mehleintrittskasten (13) wenigstens einen Stutzen (16 bzw. 20) zur Einblasung des Brennstoffs (17) aufweist zur Vorvermischung des Brennstoffs (17) mit dem vorerhitzten Rohmehl (12) vor Einführung des Gemisches in die Reaktionsstrecke des Calcinators (10).

4. Einrichtung nach Anspruch 3,
**dadurch gekennzeichnet, dass**
der oder die Stutzen (16 bzw. 20) zur Einblasung des Brennstoffs oben und/oder seitlich am Mehleintrittskasten (13) angeordnet ist/sind.

5. Einrichtung nach Anspruch 3,
**gekennzeichnet durch**
**einen pneumatischen Transport des Brennstoffes und** einen Pralltopf (18) in der Förderleitung des pneumatischen Transports des Brennstoffs (17) zwecks Drosselung der Fördergeschwindigkeit des Brennstoffs vor Einblasung in den Mehleintrittskasten (13).

## Claims

1. Process for feeding dispersible solid fuels (17) such as, for example, coal dust into the calcinator (10) of a system for manufacturing cement clinker made of cement raw meal, which raw meal is preheated in a heat exchanger system, calcinated in the calcinator provided with the fuel and baked into cement clinker in a rotary tubular kiln, whereby the pre-heated cement raw meal (12) is fed into the reaction section of the calcinator via a meal intake box (13) that has a sloping raw meal chute and deflector slide and is arranged on the outside of the calcinator (10) and connected to it through a wall opening (10a), **characterized in that** the fuel (17) is fed into the meal intake box (13) and pre-mixed with the pre-heated raw meal (12) there, and then introduced via the deflector slide (15) into the reaction section of the calcinator (10) in order to form a gas-raw meal-solid fuel-suspension that is uniformly distributed.

2. Process according to Claim 1, **characterized in that** the fuel is introduced into the meal intake box (13) pneumatically, the conveyance speed of the pneumatic transport of the fuel (17) being reduced prior to entry into the meal intake box (13).

3. Device for feeding dispersible solid fuels (17), such as, for example, coal dust into the calcinator (10) of a system for manufacturing cement clinkers made of cement raw meal, which raw meal is preheated in a heat exchanger system, calcinated in the calcinator provided with the fuel and baked into cement clinker in a rotary tubular kiln, whereby a meal intake box (13) that has a sloping raw meal chute (14) and deflector slide (15) is arranged on the outside of the calcinator (10) and connected to it through a wall opening (10a), **characterized in that** the meal intake box (13) has at least one nozzle (16 or 20) for injecting the fuel (17) in order to pre-mix the fuel (17) with the pre-heated raw meal (12) prior to the introduction of the mixture into the reaction section of the calcinator (10).

4. Device according to Claim 3, **characterized in that** the nozzle(s) (16 or 20) for injecting the fuel is/are arranged above and/or on the side on the meal intake box (13).

5. Device according to Claim 3, **characterized by** a pneumatic transport for the fuel and an impact absorber (18) in the conveyance line of the pneumatic transport for the fuel (17) for throttling the conveyance speed of the fuel prior to its injection into the meal intake box (13).

## Revendications

1. Procédé pour introduire des combustibles (17) solides dispersibles, comme par exemple de la poussière de charbon, dans le calcinateur (10) d'une installation pour la fabrication de clinker à partir de farine brute de ciment, qui est préchauffée dans un système d'échangeur de chaleur, est calcinée dans le calcinateur alimenté avec le combustible et est brûlée dans un four tubulaire tournant pour former du clinker, la farine brute de ciment (12) préchauffée étant introduite au moyen d'un caisson d'entrée de farine (13) disposé à l'extérieur sur le calcinateur (10) et relié à celui-ci par une ouverture de paroi (10a), doté d'une glissière oblique pour farine brute et d'un coulisseau à percussion, dans le tronçon de réaction du calcinateur,
**caractérisé en ce que**
le combustible (17) est introduit dans le caisson d'entrée de farine (13), y est prémélangé avec la farine brute (12) préchauffée et est introduit ensuite par le coulisseau à percussion (15) dans le tronçon de réaction du calcinateur (10) pour former une suspension de gaz-farine brute-combustible solide répartie uniformément.

2. Procédé selon la revendication 1,
**caractérisé en ce que**
l'introduction dans le caisson d'entrée de farine (13) s'effectue de façon pneumatique, la vitesse du transport pneumatique du combustible (17) étant réduite avant l'entrée dans le caisson d'entrée de farine (13).

3. Dispositif pour l'introduction de combustibles (17) solides dispersibles, comme par exemple de la poussière de charbon, dans le calcinateur (10) d'une installation pour la fabrication de clinker à base de farine brute de ciment, qui est préchauffée dans un système d'échangeur de chaleur, est calcinée dans le calcinateur alimenté avec le combustible et est brûlée dans un four tubulaire tournant pour former du clinker, un caisson d'entrée de farine (13) relié au calcinateur par une ouverture de paroi (10a), doté d'une glissière oblique pour farine brute (14) et d'un coulisseau à percussion (15), étant disposé à l'extérieur sur le calcinateur (10),
**caractérisé en ce que**
le caisson d'entrée de farine (13) présente au moins une tubulure (16 ou 20) pour l'insufflation du combustible (17) pour le prémélange du combustible (17) avec la farine brute (12) préchauffée avant l'introduction du mélange dans le tronçon de réaction du calcinateur (10).

4. Dispositif selon la revendication 3,
**caractérisé en ce que**
la ou les tubulures (16 et/ou 20) pour l'insufflation du combustible étant disposée(s) en haut et/ou sur le côté du caisson d'entrée de farine (13).

5. Dispositif selon la revendication 3,
**caractérisé par**
un transport pneumatique du combustible et un pot à percussion (18) dans la conduite du transport pneumatique du combustible (17) pour la réduction de la vitesse de transport du combustible avant l'insufflation dans le caisson d'entrée de farine (13).
